# Europäisches Patentamt

# European Patent Office

# Office européen des brevets

(19)

(11) Veröffentlichungsnummer: **0 116 687 B1**

(12) **EUROPÄISCHE PATENTSCHRIFT**

(45) Veröffentlichungstag der Patentschrift:
20.11.86

(51) Int. Cl.⁴: **B 23 K 9/02,** B 23 K 31/06, B 23 K 37/04

(21) Anmeldenummer: 83109963.5

(22) Anmeldetag: 05.10.83

(54) Vorrichtung zur Gasbeflutung von zwei miteinander zu verschweissenden insbesondere kleinkalibrigen Rohren.

(30) Priorität: 07.01.83 DE 3300382

(43) Veröffentlichungstag der Anmeldung:
29.08.84 Patentblatt 84/35

(45) Bekanntmachung des Hinweises auf die Patenterteilung:
20.11.86 Patentblatt 86/47

(84) Benannte Vertragsstaaten:
AT BE CH DE FR GB IT LI LU NL SE

(56) Entgegenhaltungen:
AT - B - 355 399
DE - A - 2 701 325
DE - A - 3 008 153
GB - A - 1 138 685
US - A - 4 101 067

Patent Abstracts of Japan, Band 6, Nr. 134, 21. Juli 1982

(73) Patentinhaber: Adam, Irmgard, Wittekindstrasse 46,
D-4250 Bottrop (DE)
Patentinhaber: Adam, Detlev Franz Josef,
Wittekindstrasse 46, D-4250 Bottrop (DE)
Patentinhaber: Adam, Markus (gesetzlich vertreten
durch Adam, Irmgard), Wittekindstrasse 46,
D-4250 Bottrop (DE)

(72) Erfinder: Adam, Josef, verstorben, (DE)

(74) Vertreter: Niemann, Uwe, Dr.-Ing., Ahornstrasse 41,
D-4300 Essen 1 (DE)

## Beschreibung

Die Erfindung betrifft eine Vorrichtung zur Gasbeflutung von zwei miteinander zu verschweissenden, insbesondere kleinkalibrigen Rohren – mit einem in den zu beflutenden Rohrabschnitt einführbaren Körper aus feinporigem Material, einer daran anschliessbaren Gaszuführung und mit beidseits des Körpers angeordneten, gegen das Rohrinnere abdichtenden Stützen.

Bei der Herstellung von hochwertigen Rohrschweissverbindungen an niedrig- und hochlegierten Stählen wird Schutzgas verwendet, um das Verzundern der Schweissnähte und der Übergangszonen im Rohrinnern zu verhindern. Bei einer Vorrichtung der eingangs beschriebenen Gattung (DE-AI-30 08 153), welche für grosskalibrige Rohre bestimmt ist, wird der mit Gas zu beflutende Raum dadurch luftfrei gehalten, dass als Stützen aufblasbare Wülste an den Enden der Vorrichtung den zu beflutenden Raum abdichten. In den so entstandenen Hohlraum wird Schutzgas geleitet und unter leichtem Druck soviel Schutzgas nachgeliefert, wie aus den Undichtigkeitsstellen bzw. dem durch die Schweissnaht zu verschliessenden Luftspalt entweicht, damit keine Luft durch diese Öffnungen eindringt und die Wirkung des Schutzgases beeinträchtigt.

Wichtig ist auch, dass sich innerhalb der miteinander zu verschweissenden Rohre eine laminare Gasströmung ausbildet, damit nicht durch Turbulenzen und Druckschwankungen Luft beispielsweise durch den Spalt zwischen den beiden Rohren eingesaugt wird. Deshalb erfolgt die Gaszuführung durch einen Körper aus feinporigem Material, insbesondere Sintermetall.

Beim Verschweissen von Rohren ist aber zu beachten, dass die Schweisshitze in den Rohrwandungen sich verhältnismässig schnell ausbreitet, so dass auch weiter von der Schweissnaht entfernte Abschnitte der Rohrwandung in kurzer Zeit verhältnismässig hohe Temperaturen annehmen. Die Ausbreitung der Schweisshitze ist unabhängig vom Kaliber der miteinander zu verschweissenden Rohre.

Bei der gattungsgemässen Vorrichtung ist der Abstand der beiden endseitig aufblasbaren Wülste nicht völlig frei wählbar. Einerseits will man den zu beflutenden Raum möglichst klein halten. Andererseits soll die Vorrichtung insgesamt aber auch so abgestützt werden, dass Verkantungen oder Schräglagen weitgehend ausgeschlossen sind. Würde man die bekannte Vorrichtung für kleinkalibrige Rohre ausbilden, dann würden die aufblasbaren Wülste so dicht an die Schweissnaht heranrücken, dass eine Beeinträchtigung ihrer Funktionsfähigkeit durch Schweisshitze zu befürchten ist. Hinzu kommt, dass auch die Gestaltung solcher kleinen Wülste problematisch ist.

Bei einer anderen bekannten Vorrichtung (GB-A-1 138 685) werden als Stützen kranzförmig angeordnete Streifenbürsten aus einem rostfreien, hitzebeständigen Stahl eingesetzt. Diese Streifenbürsten sind unmittelbar auf einem der Gaszuführung dienenden Rohr angeordnet. Sie besitzen deshalb verhältnismässig lange Borsten, deren Fähigkeit, Stützkräfte aufzunehmen, begrenzt ist.

Beide bekannte Vorrichtungen lassen sich in gewissem Umfang an unterschiedliche Rohrkaliber anpassen, weil sowohl die Wülste als auch die Streifenbürsten nachgiebig sind. Es fehlt aber eine an unterschiedliche Rohrkaliber anpassbare Vorrichtung, die die eingangs beschriebenen Nachteile vermeidet.

Aufgabe der Erfindung ist es, eine gattungsgemässe Vorrichtung so zu verbessern, dass sie auf einfache Weise an unterschiedliche Rohrkaliber angepasst werden kann.

Diese Aufgabe wird dadurch gelöst, dass der Körper zwischen zwei Scheiben gehalten ist, die an ihrem Umfang durchgehend mit Streifenbürsten besetzt sind, wobei die Streifenbürsten an Segmenten befestigt sind, welche in radialer Richtung verschieblich an den Scheiben angebracht sind. Insbesondere können die Segmente Langlöcher für zugeordnete Befestigungsschrauben aufweisen, mit denen die Segmente an den Scheiben fixiert werden.

Sind mehrere Reihen Streifenbürsten vorhanden, dann empfiehlt es sich, die Segmente versetzt zueinander anzuordnen, um den Schutzgasverlust gering zu halten. Eine weitere Reduzierung des Schutzgasverlustes ist dann möglich, wenn zwischen den Reihen der Streifenbürsten eine Ringscheibe aus einem nachgiebigen, hitzebeständigen Material, insbesondere aus einem Keramikgewebe, angeordnet ist, welche auch bei grossen Druckdifferenzen im Bereich der Vorrichtung sicherstellt, dass nur wenig oder gar kein Schutzgas aus dem Schutzgasraum entweichen oder Luft in den Schutzgasraum eindringen kann.

Im folgenden werden in der Zeichnung dargestellte Ausführungsbeispiele der Erfindung erläutert; es zeigen:

Fig. 1 in schematischer Darstellung und teilweise geschnitten die Enden zweier miteinander zu verschweissender Rohre mit einer Vorrichtung zur Gasbeflutung;

Fig. 2 eine andere Ausführung des Gegenstandes nach Fig. 1;

Fig. 3 teilweise einen Axialschnitt durch eine weitere Ausführung des Gegenstandes nach Fig. 1;

Fig. 4 teilweise eine axiale Draufsicht auf den Gegenstand nach Fig. 3.

In der Zeichnung sind die Enden 1, 2 von zwei miteinander zu verschweissenden Rohrabschnitten dargestellt. Die Rohrabschnitte sollen unter Schutzgas verschweisst werden. In das Innere der Enden 1, 2 ist eine Vorrichtung zur Gasbeflutung eingesetzt, die in ihrem grundsätzlichen Aufbau aus zwei im Abstand voneinander angeordneten kreisringförmigen Scheiben 3, 4 besteht, die an ihrem inneren Umfang über einen rohrförmigen Steg 5 gasdicht miteinander verbunden sind und zwischen denen im Bereich des äusseren Umfanges ein rohrförmiger Abschnitt 6 aus Sintermetall angeordnet ist. Die Scheiben 3, 4 und der Steg 5 bestehen aus Metall. Der äussere Umfang der Scheiben 3, 4 ist jeweils durchgehend mit Streifenbürsten 7, 8 besetzt, die Fasern aus einem Cr-Ni-Stahl besitzen. Über die Streifenbürsten 7, 8 stützt sich die Vorrichtung an der Innenseite der Rohre ab. Ausserdem begrenzen die Streifenbürsten 7, 8 einen Ringraum 9, der im übrigen zwischen dem rohrförmigen Abschnitt 6 aus Sintermetall und der Innenseite der Rohre gebildet ist.

Über einen Schlauch 10, der auf einen Stutzen 11 aufgeschoben ist, wird das Schutzgas einem etwa mittig angeordneten Verteiler 12 zugeführt, von dem im wesentlichen radiale Verteilerleitungen 13 ausgehen, die am rohrförmigen Steg 5 enden und damit in einen Ringraum 14 münden, der zwischen den Scheiben 3, 4 dem Steg 5 und dem Abschnitt 6 aus Sintermetall gebildet ist.

Das Schutzgas strömt aus dem Ringraum 14 durch das Sintermetall des rohrförmigen Abschnitts 6 in den äusseren Ringraum 9, wo sich eine laminare Strömung ausbildet. Das Schutzgas im Ringraum 9 verhindert, dass Luft durch den Schweissspalt 15 in den Ringraum 9 eingesaugt wird. Die Streifenbürsten 7, 8 bilden gleichsam ein Labyrinth mit hohem Strömungswiderstand für das Schutzgas, so dass der Schutzgasverbrauch gering bleibt.

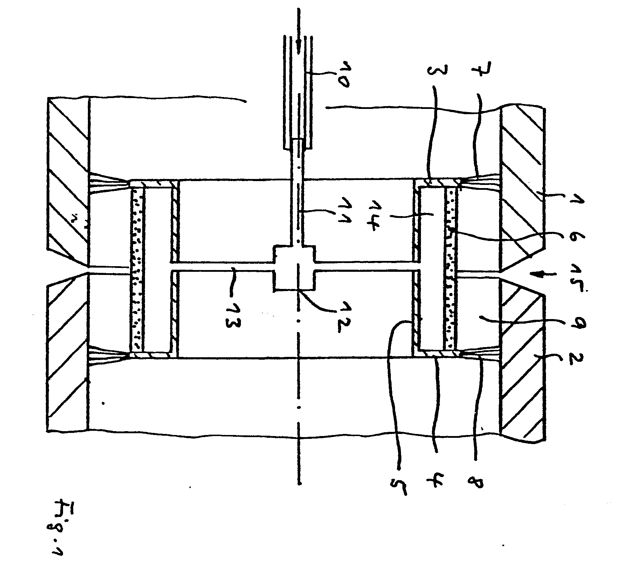

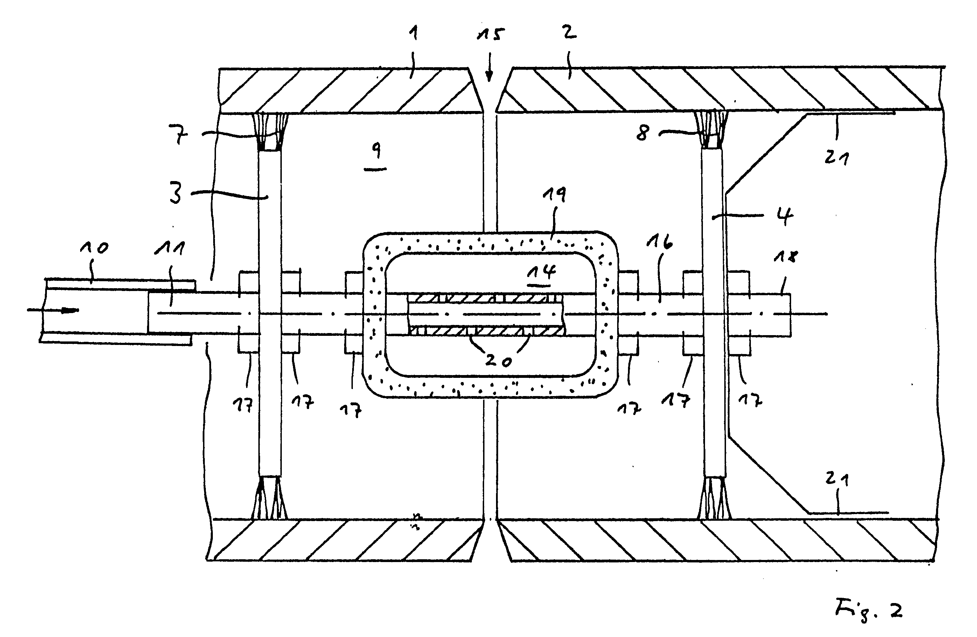

Bei der in Fig. 2 dargestellten Ausführung bezeichnen gleiche Bezugszeichen gleiche Teile. Die Scheiben 3, 4 sind in diesem Fall Vollscheiben, die an ihrem Aussenumfang mit jeweils zwei nebeneinanderliegenden Reihen von Streifenbürsten 7, 8 durchgehend besetzt sind. Die beiden Scheiben 3, 4 sind mit gegenseitigem Abstand auf einem mittig angeordneten Rohr 16 mit Hilfe von Muttern 17 verspannt. Das Rohr 16 ist an dem in Fig. 2 rechten Ende 18 geschlossen und bildet an dem in Fig. 2 linken Ende den Stutzen 11 für den Anschluss des Schlauches 10.

Zwischen den beiden Scheiben 3, 4 ist auf das Rohr 16 ein Hohlkörper 19 aufgesetzt, der das Rohr 16 umgibt und dadurch einen inneren Ringraum 14 bildet. Der Hohlkörper 19 besteht aus einem Sintermetall.

Das Rohr 16 weist im Inneren des Hohlkörpers 19 Öffnungen 20 für den Gasdurchtritt auf. Dementsprechend kann das durch den Schlauch 10 herangeführte Schutzgas durch den Stutzen 11, das Rohr 16, die Öffnungen 20 in den Ringraum 14 und von dort durch den Hohlkörper 19 in den äusseren Ringraum 9 strömen. Im äusseren Ringraum 19 bildet sich wiederum eine laminare Gasströmung auf, die Lufteinbrüche durch den Schweissspalt 15 verhindert.

Die in der Fig. 2 rechte Scheibe 4 trägt an ihrer Aussenseite einen Bügel oder ein Bügelkreuz mit davon abgewinkelten Federzungen 21, die sich an der Innenseite des Rohres abstützen und die Vorrichtung zentrieren bzw. halten. Dadurch werden die Streifenbürsten 7, 8 von Stützkräften entlastet. Nicht dargestellt ist, dass auch die andere Scheibe 3 aussenseitig einen Bügel oder ein Bügelkreuz mit Federzungen 21 tragen kann. Die Federzungen 21 spannen jedenfalls einen Durchmesser auf, der im wesentlichen dem Aussendurchmesser der Streifenbürsten 7, 8 entspricht, so dass die Streifenbürsten 7, 8 beim Einsetzen der Vorrichtung und bei eingesetzter Vorrichtung nur wenig verformt werden.

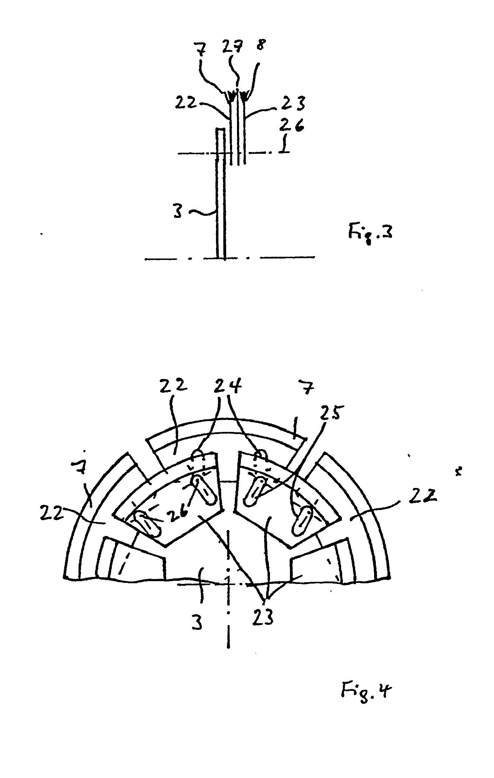

In den Fig. 3 und 4 ist dargestellt, dass die Streifenbürsten 7, 8 auch am Aussenumfang von Segmenten 22, 23 befestigt sein können, die ihrerseits radial verschieblich an der Scheibe 3 bzw. 4 angebracht sind. Dazu weisen die Segmente 22, 23 jeweils Langlöcher 24, 25 für zugeordnete Befestigungsschrauben 26 auf, mit denen die Segmente 22, 23 an der jeweiligen Scheibe 3 bzw. 4 befestigt sind.

In Fig. 3 sind wiederum zwei Reihen Streifenbürsten 7, 8 dargestellt, die jeweils den gleichen Umfang aufspannen. In Fig. 4 sind die Segmente 22, 23 aus Gründen besserer Übersicht radial zueinander versetzt angeordnet. Es versteht sich, dass im Betriebszustand die Streifenbürsten 7, 8 jeweils den gleichen Umfang aufspannen.

Aus Fig. 4 entnimmt man auch, dass die Streifenbürsten 7, 8 und ihre zugeordneten Segmente 22, 23 in Umfangsrichtung zueinander versetzt sind, um den Schutzgasverlust gering zu halten.

Ferner ist in Fig. 3 angedeutet, dass zwischen den beiden Reihen der Streifenbürsten 7, 8 auch eine Ringscheibe 27 aus einem nachgiebigen, hitzebeständigen Keramikgewebe angeordnet sein kann. Diese Ringscheibe 27 übernimmt zusätzliche Dichtungsfunktionen bei grossen Druckdifferenzen im Bereich der Vorrichtung.

## Patentansprüche

1. Vorrichtung zur Gasbeflutung von zwei miteinander zu verschweissenden, insbesondre kleinkalibrigen Rohren (1, 2), mit einem in den zu beflutenden Rohrabschnitt einführbaren Körper (6, 19) aus feinporigem Material, einer daran anschliessbaren Gaszuführung (10, 11) und mit beidseits des Körpers (6, 19) angeordneten, gegen das Rohrinnere abdichtenden Stützen, dadurch gekennzeichnet, dass der Körper (6, 19) zwischen zwei Scheiben (3, 4) gehalten ist, die an ihrem Umfang durchgehend mit Streifenbürsten (7, 8) besetzt sind, wobei die Streifenbürsten (7, 8) an Segmenten (22, 23) befestigt sind, welche in radialer Richtung verschieblich an den Scheiben (3 , 4) angebracht sind.

2. Vorrichtung nach Anspruch 1, dadurch gekennzeichnet, dass die Segmente (22, 23) Langlöcher (24, 25) für zugeordnete Befestigungsschrauben (26) aufweisen.

3. Vorrichtung nach Anspruch 1 oder 2, dadurch gekennzeichnet, dass bei mehreren Reihen Streifenbürsten (7, 8) die Segmente (22, 23) versetzt zueinander angeordnet sind.

4. Vorrichtung nach einem der Ansprüche 1–3, dadurch gekennzeichnet, dass zwischen den Reihen der Streifenbürsten (7, 8) eine Ringscheibe (27) aus einem nachgiebigen hitzebeständigen Material angeordnet ist.

5. Vorrichtung nach Anspruch 4, dadurch gekennzeichnet, dass die Ringscheibe (27) aus einem Keramikgewebe besteht.

5        **0116687**        6

## Claims

1. A device for application of shielding gas to the area adjacent a joint between two tubes to be welded, in particular tubes of small diameter (1, 2), with a body (6, 19) of fine pored material which can be introduced to the portion of the joint where shielding gas shall be applied, a gas supply means (10, 11) which can be connected to that body and with supports sealing the interior of the tube, characterized in that the body (6, 19) is held between two disks (3, 4) which are continuously fitted at their circumference with lamellar brush means (7, 8), the lamellar brush means being fastened to segmental elements (22, 23) which are displaceably mounted in radial direction in the disks (3, 4).

2. A device according to claim 1, characterized in that the segmental elements (22, 23) are provided with long holes (24, 25) for the associated fastening screws (26).

3. A device according to claim 1 or claim 2, characterized in that the segmental elements (22, 23) are staggered when several rows of lamellar brush means are provided.

4. A device according to one of the claims 1 to 3, characterized in that an annular disk (27) of a flexible heat resistant material is arranged between the rows of the lamellar brush means (7, 8).

5. A device according to claim 4, characterized in that the annular disk (627) is made of a ceramic weave fabric.

## Revendications

1. Dispositif pour l'introduction de gaz dans deux tubes (1, 2), en particulier de petit calibre, à souder entre eux, muni d'un corps (6, 19) en matière finement poreuse pouvant être introduit dans le tronçon de tube à traiter, d'une amenée de gaz (10, 11) pouvant être raccordé à ce corps et de tubulures disposées de part et d'autre du corps (6, 19), assurant l'étanchéité vis-à-vis de l'intérieur du tube, caractérisé en ce que le corps (6, 19) est retenu entre deux disques (3, 4) qui sont garnis partout à leur circonférence de brosses en bande (7, 8), les brosses en bande (7, 8) étant fixées à des secteurs (22, 23) qui sont disposés sur les disques (3, 4) de manière à pouvoir coulisser en direction radiale.

2. Dispositif selon la revendication 1, caractérisé en ce que les secteurs (22, 23) présentent des trous allongés (24, 25) pour des vis de fixation adjointes (26).

3. Dispositif selon l'une des revendications 1 et 2, caractérisé en ce que dans le cas de plusieurs rangées de brosses en bande (7, 8), les secteurs (22, 23) sont disposés de façon décalée entre eux.

4. Dispositif selon l'une des revendications 1 à 3, caractérisé en ce qu'entre les rangées de brosses en bande (7, 8) est disposé un disque annulaire (27) formé d'une matière souple résistant à la chaleur.

5. Dispositif selon la revendication 4, caractérisé en ce que le disque annulaire (27) est formé d'un tissu de céramique.

4

Fig. 1

Fig. 2

Fig.3

Fig.4